# EUROPEAN PATENT APPLICATION

(11) **EP 4 575 725 A1**
(43) Date of publication of application: **25.06.2025**
(21) Application number: 24151461.1
(22) Date of filing: 11.01.2024
(51) Int. Cl.: G06F 3/01

(54) **HAPTIC ACTUATOR USING MAGNETORHEOLOGICAL ELASTOMER AND MAGNETORHEOLOGICAL FLUID**

(30) Priority: 21.12.2023 KR 20230187848
(71) Applicant: Korea University of Technology and Education Industry-University Corporation Foundation, Cheonan-si, Chungcheongnam-do 31253 (KR)
(72) Inventor: HEO, Yong Hae, 31253 Chungcheongnam-do (KR); SONG, Yuk Gwon, 31158 Chungcheongnam-do (KR); KIM, Sang Youn, 06276 Seoul (KR)
(74) Representative: HGF

(57) **Abstract**

The present invention relates to a haptic actuator using a magnetorheological elastomer and a magnetorheological fluid, which has a shape in which a magnetorheological elastomer surrounds a ferrous elastomer and a magnetorheological fluid, the haptic actuator being capable of providing kinesthetic feedback related to an external force by increasing rigidity of the magnetorheological elastomer and increasing viscosity of the magnetorheological fluid, and capable of providing vibration feedback by generating vibration by being repeatedly compressed and restored in shape when an alternating current magnetic field is applied.

## Description

### CROSS-REFERENCE TO RELATED APPLICATIONS

This application claims priority to and the benefit of Korean Patent Application No. 10-2023-0187848 filed in the Korean Intellectual Property Office on December 21, 2023, the entire contents of which are incorporated herein by reference.

### TECHNICAL FIELD

The present invention relates to a haptic actuator using a magnetorheological (MR) elastomer and a magnetorheological (MR) fluid, and more particularly, to a haptic actuator using a magnetorheological elastomer and a magnetorheological fluid, which has a shape in which a magnetorheological elastomer surrounds a ferrous elastomer and a magnetorheological fluid, the haptic actuator being capable of providing kinesthetic feedback related to an external force by increasing rigidity of the magnetorheological elastomer and increasing viscosity of the magnetorheological fluid, and capable of providing vibration feedback by generating vibration by being repeatedly compressed and restored in shape when an alternating current magnetic field is applied.

### BACKGROUND ART

In general, a magnetorheological fluid (MR fluid) refers to a fluid having an effect of increasing fluid flow resistance, which is similar to an ER effect, when a magnetic field is loaded. The MR fluid is a fluid made by dispersing paramagnetic particles in a solvent having low magnetic permeability. When no magnetic field is loaded, the MR fluid performs a motion similar to a motion of a Newtonian fluid in which particles freely move. However, when a magnetic field is loaded, the MR fluid performs a motion similar to a motion of a Bingham fluid that has yield stress as particles are charged and a chain structure is formed.

The MR fluid is used to design, manufacture, and position various applications and control vibration. For example, the MR fluid is used as a shock absorber for a vehicle, an impact damper, an engine mount, a vehicle suspension, and the like.

Meanwhile, currently developed MR dampers are very expensive and have large volumes, and thus the MR dampers are mainly used in vehicles, railways, or civil/architectural fields. In order to use the MR dampers for haptic shoes, VR controller buttons, and the like, the volume and weight of the MR damper need to be downsized, and the price competitiveness needs to be improved by remarkably reducing the production costs compared to the current situation. Therefore, there is a need to develop a technology to satisfy the above-mentioned situation.

### [Document of Related Art]

### [Patent Document]

Korean Patent No. 10-2311171

### SUMMARY OF THE INVENTION

The present invention has been made in an effort to solve the above-described problems, and an object of the present invention to provide a haptic actuator using a magnetorheological elastomer and a magnetorheological fluid, which has a shape in which a magnetorheological elastomer surrounds a ferrous elastomer and a magnetorheological fluid, the haptic actuator being capable of providing kinesthetic feedback related to an external force by increasing rigidity of the magnetorheological elastomer and increasing viscosity of the magnetorheological fluid, and capable of providing vibration feedback by generating vibration by being repeatedly compressed and restored in shape when an alternating current magnetic field is applied.

An embodiment of the present invention provides a haptic actuator using a magnetorheological elastomer and a magnetorheological fluid, the haptic actuator including: a magnetorheological elastomer housing (110) having a hollow portion (111) therein; an elastomer (120) provided in the magnetorheological elastomer housing (110); and a magnetorheological fluid (130) with which the hollow portion (111) is filled, in which when an external magnetic field is applied, rigidity of the magnetorheological elastomer housing (110) increases, and viscosity of the magnetorheological fluid (130) increases, such that a resistive force against an external force increases, and in which when an external alternating current magnetic field is applied, the magnetorheological elastomer housing (110) generates vibration while being repeatedly compressed and restored in a direction in which the external magnetic field is applied.

In the embodiment, the magnetorheological elastomer housing (110) may have a cylindrical shape having a hollow portion therein.

In the embodiment, the magnetorheological elastomer housing (110) may have a hollow portion therein and be formed to have a size corresponding to an area of a sole of a shoe.

In the embodiment, the elastomer (120) may be provided as a plurality of elastomers (120) provided in the hollow portion (110) inside the magnetorheological elastomer housing (110) having a size corresponding to the area of the sole of the shoe.

In the embodiment, when a magnetic field is locally generated from a particular external magnetic field generation device among a plurality of external magnetic field generation devices provided in an entire region of the sole of the shoe, rigidity and viscosity of the magnetorheological elastomer housing (110) and the magnetorheological fluid (130) may be locally increased in a region adjacent to a region in which the corresponding magnetic field is generated.

In the embodiment, the magnetorheological elastomer housing (110) may be provided as a plurality of magnetorheological elastomer housings (110) corresponding to an area of a sole of a shoe.

In the embodiment, upper and lower sides of the elastomer (120) may adjoin upper and lower surfaces in the magnetorheological elastomer housing (110).

In the embodiment, when the external magnetic field is applied, iron particles in the magnetorheological fluid (130) may be vertically aligned between parts of the elastomer (120) and hinder compression of the elastomer (120) .

In the embodiment, when the external alternating current magnetic field is applied, a partial region of the magnetorheological elastomer housing (110) may be compressed in a direction in which the external alternating current magnetic field is applied, and when the direction in which the external alternating current magnetic field is applied is changed, a process in which a shape of the magnetorheological elastomer housing (110) is restored to an original shape by an elastic force of the elastomer (120) may be repeated.

In the embodiment, when an external force is applied in a direction from an upper side to a lower side in a state in which no external magnetic field is applied, the magnetorheological elastomer housing (110) may be compressed downward and deformed in shape, such that a height of the magnetorheological elastomer housing (110) is reduced, and a lateral surface of the magnetorheological elastomer housing (110) extends outward while being compressed downward.

According to the embodiment of the present invention, it is possible to provide kinesthetic feedback related to the external force by increasing rigidity of the magnetorheological elastomer and increasing viscosity of the magnetorheological fluid and to provide vibration feedback by generating vibration by being repeatedly compressed and restored in shape when an alternating current magnetic field is applied.

In addition, according to the embodiment of the present invention, the haptic actuator with the simplified and miniaturized structure may be applied to the application, such as the haptic shoe or the VR controller, to which an ultra-small volume is required to be applied, such that the price competitiveness may be improved by remarkably reducing the manufacturing costs.

### BRIEF DESCRIPTION OF THE DRAWINGS

FIG. 1 is a view illustrating a configuration of a haptic actuator 100 using a magnetorheological elastomer and a magnetorheological fluid according to an embodiment of the present invention.
FIG. 2 is a view illustrating a concept that a resistive force increases when a magnetic field is applied to a magnetorheological elastomer housing 110.
FIG. 3 is a view illustrating a state in which a shape of the magnetorheological elastomer housing 110 is deformed by an applied external magnetic field.
FIG. 4 is a view illustrating a state in which the magnetorheological elastomer housing 110 is vibrated by an applied external alternating current magnetic field.
FIG. 5 is a view illustrating an embodiment in which the haptic actuator 100 using a magnetorheological elastomer and a magnetorheological fluid according to the present invention is applied to an actuator including a coil and a ferromagnetic housing.
FIG. 6 is a view illustrating an embodiment in which the haptic actuator 100 using a magnetorheological elastomer and a magnetorheological fluid according to the present invention is applied to a button of a VR controller.
FIG. 7 is a view illustrating an embodiment in which the haptic actuator 100 using a magnetorheological elastomer and a magnetorheological fluid according to the present invention is applied to a sole of a haptic shoe.
FIG. 8 is a view illustrating an embodiment in which an electrorheological elastomer housing is applied instead of the magnetorheological elastomer housing 110 illustrated in FIG. 1, and an electrorheological fluid is applied instead of a magnetorheological fluid 130.

### DETAILED DESCRIPTION

Hereinafter, exemplary embodiments are proposed to help understand the present invention. However, the following embodiments are provided just for more easily understanding the present invention, and the contents of the present invention are not limited by the embodiments.

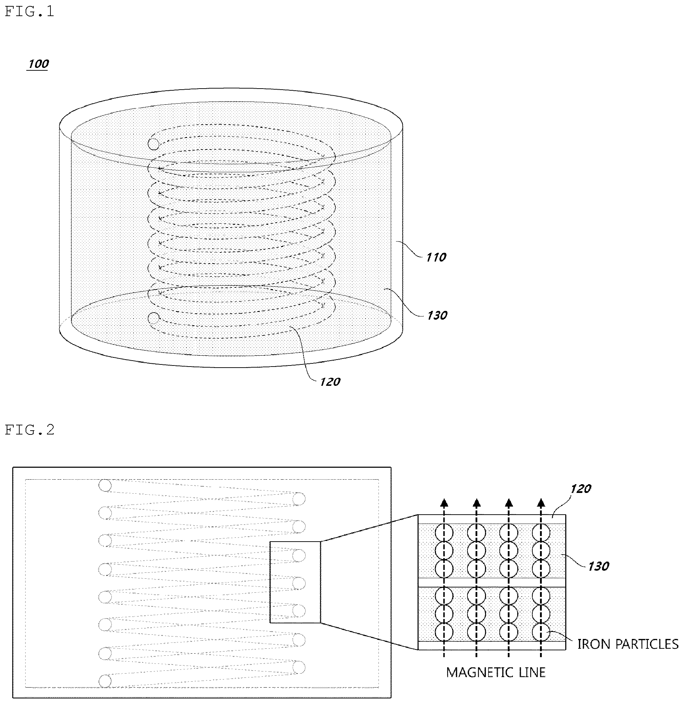

FIG. 1 is a view illustrating a configuration of a haptic actuator 100 using a magnetorheological elastomer and a magnetorheological fluid according to an embodiment of the present invention, and FIG. 2 is a view illustrating a concept that a resistive force increases when a magnetic field is applied to a magnetorheological elastomer housing 110.

With reference to FIGS. 1 and 2, the haptic actuator 100 using a magnetorheological elastomer and a magnetorheological fluid according to the embodiment of the present invention broadly includes the magnetorheological elastomer housing 110, an elastomer 120, and a magnetorheological fluid 130.

First, the magnetorheological elastomer housing 110 has a hollow portion 111 therein, and the elastomer 120 and the magnetorheological fluid 130 are accommodated in the corresponding hollow portion 111. More specifically, the hollow portion 111 defines a space sufficient for accommodating the elastomer 120 and the magnetorheological fluid 130. In this case, because the magnetorheological elastomer housing 110 surrounds the elastomer 120 and the magnetorheological fluid 130, the magnetorheological fluid 130 may be prevented from leaking to the outside, even though a shape of the magnetorheological elastomer housing 110 is deformed, e.g., compressed or distorted, by an external force.

The magnetorheological elastomer 110 may basically have a cylindrical shape having a hollow portion therein. In addition, in the embodiment, the magnetorheological elastomer 110 may have a shape similar to a shape of a shoe sole of a haptic shoe and have a size corresponding to an area of the corresponding shoe sole.

The elastomer 120 is provided in the magnetorheological elastomer 110 and directed in an upward/downward direction. Basically, a single elastomer 120 is provided. However, the number or arrangement of the elastomers 120 may be changed, as much as needed, depending on a shape or size of the magnetorheological elastomer 110.

In case that an external magnetic field or an external alternating current magnetic field is applied, the magnetorheological elastomer 110 may be deformed in shape in a direction in which the magnetic field is applied. This configuration will be described below.

The elastomer 120 is provided in the magnetorheological elastomer housing 110 and disposed to be directed in the upward/downward direction. The elastomer 120 is mainly made of a rigid body (iron) and provided so that upper and lower sides of the elastomer 120 respectively adjoin upper and lower surfaces in the magnetorheological elastomer housing 110.

The elastomer 120 autonomously may have an elastic force and thus be compressed in accordance with the deformation in shape of the magnetorheological elastomer housing 110 caused by a physical external force applied from the upper or lower side or by an external magnetic field applied to the magnetorheological elastomer housing 110.

The elastomer 120 autonomously maintains the elastic force when the elastomer 120 is compressed. Therefore, when an object, which applies the external force, disappears or when the external magnetic field, which has been applied to the magnetorheological elastomer housing 110, is eliminated, the elastomer 120 may be restored to an original state, such that the magnetorheological elastomer housing 110 may be restored to an original shape.

In addition, in the hollow portion 111 of the magnetorheological elastomer housing 110, the entire region, except for the elastomer 120, is filled with the magnetorheological fluid 130. Therefore, when the viscosity of the magnetorheological fluid 130 is increased by the external magnetic field, iron particles, which constitute the magnetorheological fluid 130, are vertically aligned between the parts of the elastomers 120, such that a structurally resistive force may increase in a state in which the elastomer 120 is not compressed. This configuration will be described below.

In the hollow portion 111, the remaining region, except for the elastomer 120, is filled with the magnetorheological fluid 130. When an external magnetic field is applied, the viscosity of the magnetorheological fluid 130 increases, such that the magnetorheological fluid 130 hinders the compression of the above-mentioned elastomer 120. In addition, when the generation of the external magnetic field is stopped in this state, the viscosity of the magnetorheological fluid 130 is restored to its original viscosity, such that the elastomer 120 may be compressed to the original state.

Next, a state in which the magnetorheological elastomer housing 110 and the magnetorheological fluid 130 generate vibration by being deformed in shape by the external magnetic field or the external alternating current magnetic field or repeatedly compressed or restored in a direction in which the magnetic field is applied will be more specifically described.

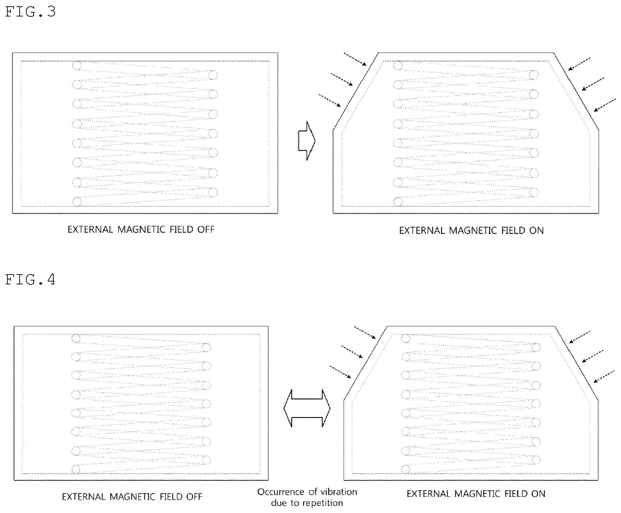

FIG. 3 is a view illustrating a state in which a shape of the magnetorheological elastomer housing 110 is deformed by an applied external magnetic field, and FIG. 4 is a view illustrating a state in which the magnetorheological elastomer housing 110 is vibrated by an applied external alternating current magnetic field.

First, with reference to FIG. 3, when the external magnetic field is applied to the magnetorheological elastomer housing 110 from the outside, the external magnetic field increases the rigidity of the magnetorheological elastomer housing 110, such that a resistive force against the structurally external force may be increased, and thus the shape deformation may be suppressed.

At the same time, the viscosity of the magnetorheological fluid 130, with which the magnetorheological elastomer housing 110 is filled, is increased. The iron particles in the magnetorheological fluid 130 are vertically aligned between the parts of the elastomer 120, such that the elastomer 120 may not be compressed, and the structurally resistive force may be additionally increased, such that the shape deformation may be further suppressed.

This feature may provide various types of kinesthetic feedback by being applied to buttons (e.g., a button of a VR controller), which restrict pressure applied from the outside in some instances, or to a sole of a shoe worn by a user in some instances.

With reference to FIG. 4, when the external alternating current magnetic field is applied to the magnetorheological elastomer housing 110 from the outside, the shape of the magnetorheological elastomer housing 110 is deformed by the external alternating current magnetic field in the direction in which the external alternating current magnetic field is applied. In this case, the elastomer 120 disposed inside the magnetorheological elastomer housing 110 is also compressed correspondingly. When the direction in which the external alternating current magnetic field is applied is changed to the opposite direction, the shape of the magnetorheological elastomer housing 110 is restored to the original shape by a restoring force of the elastomer 120. The magnetorheological elastomer housing 110 may be vibrated when this process is repeated. This feature may generate vibration by being applied to buttons (e.g., the button of the VR controller), which restrict pressure applied from the outside in some instances, or provide vibration feedback in accordance with a motion of making a step by being applied to the sole of the shoe worn by the user in some instances.

Next, embodiments in which the haptic actuator 100 using a magnetorheological elastomer and a magnetorheological fluid is applied to various applications such as an actuator including a coil and a ferromagnetic housing, a button of a VR controller, or a sole of the haptic shoe will be described.

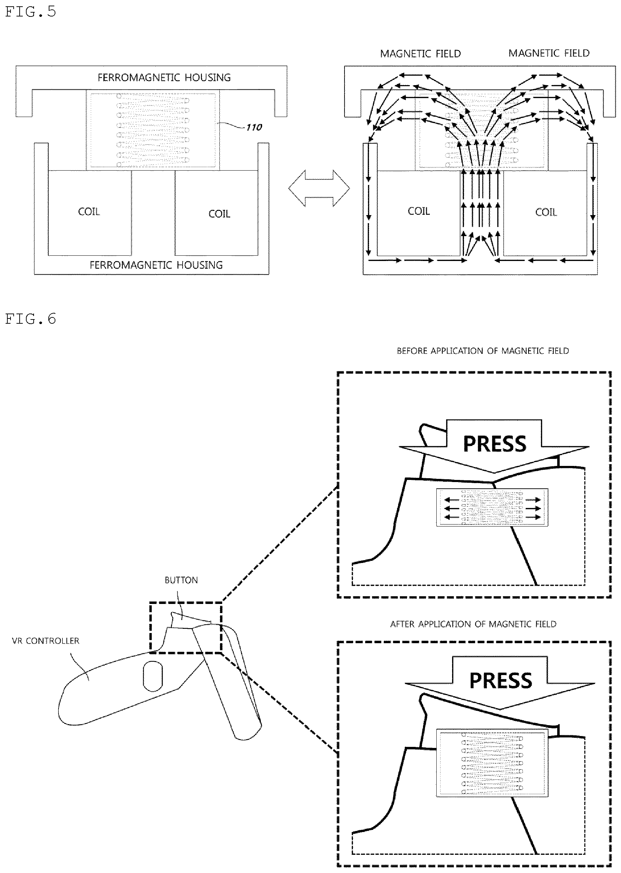

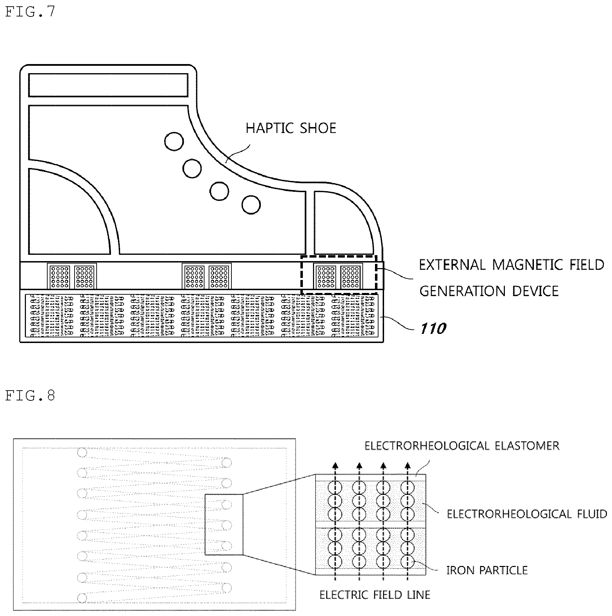

FIG. 5 is a view illustrating an embodiment in which the haptic actuator 100 using a magnetorheological elastomer and a magnetorheological fluid according to the present invention is applied to an actuator including a coil and a ferromagnetic housing, FIG. 6 is a view illustrating an embodiment in which the haptic actuator 100 using a magnetorheological elastomer and a magnetorheological fluid according to the present invention is applied to a button of a VR controller, and FIG. 7 is a view illustrating an embodiment in which the haptic actuator 100 using a magnetorheological elastomer and a magnetorheological fluid according to the present invention is applied to a sole of a haptic shoe.

With reference to FIG. 5, the haptic actuator 100 using a magnetorheological elastomer and a magnetorheological fluid according to the present invention may be applied to an actuator including a coil and a ferromagnetic housing.

In this case, the actuator including the coil and the ferromagnetic housing may correspond to the button or the damper and form the magnetic field in the entire coil and the entire interior of the ferromagnetic housing when the magnetic field is applied, as illustrated in FIG. 5B. In this case, the deformation in shape of the magnetorheological elastomer housing 110 may be maximally suppressed by the increase in rigidity of the magnetorheological elastomer housing 110 and the increase in viscosity of the magnetorheological fluid 130 in the haptic actuator 100 using a magnetorheological elastomer and a magnetorheological fluid. Therefore, resistive forces of the magnetorheological elastomer housing 110, the elastomer 120, and the magnetorheological fluid 130 may be maximized without decreasing a height, such that a high resistive force may be applied to the actuator including the coil and the ferromagnetic housing.

In addition, when the external alternating current magnetic field is applied, the shape of the magnetorheological elastomer housing 110 is deformed by the external alternating current magnetic field in the direction in which the external alternating current magnetic field is applied. In this case, the elastomer 120 disposed inside the magnetorheological elastomer housing 110 is also compressed correspondingly. When the direction in which the external alternating current magnetic field is applied is changed to the opposite direction, the shape of the magnetorheological elastomer housing 110 is restored to the original shape by a restoring force of the elastomer 120. The actuator including the coil and the ferromagnetic housing vibrates when this process is repeated.

With reference to FIG. 6, the haptic actuator 100 using a magnetorheological elastomer and a magnetorheological fluid according to the present invention may also be applied to the button of the VR controller. When a magnetic field is applied to the button that is freely pushed at ordinary times, the deformation in shape of the magnetorheological elastomer housing 110 may be maximally suppressed by the increase in rigidity of the magnetorheological elastomer housing 110 and the increase in viscosity of the magnetorheological fluid 130 in the haptic actuator 100 using a magnetorheological elastomer and a magnetorheological fluid, such that the button may not be pushed, thereby providing various user experiences. The button may be selectively pushed in various environments such as a game or a VR content by using the above-mentioned feature.

With reference to FIG. 7, the haptic actuator 100 using a magnetorheological elastomer and a magnetorheological fluid according to the present invention may also be applied to the sole of the haptic shoe. More specifically, the sole of the haptic shoe may be equipped with a separate external magnetic field generation device that includes a coil, an electromagnet, an EPM, and the like. A plurality of external magnetic field generation devices may be provided in the sole of the haptic shoe, and all the external magnetic field generation devices may generate magnetic fields in a lump. Alternatively, a particular external magnetic field generation device may locally generate a magnetic field.

In this case, the magnetorheological elastomer housing 110, which corresponds to a shape, size, and area of the sole of the haptic shoe, may be provided below the external magnetic field generation devices. The plurality of elastomers 120 may be disposed in the magnetorheological elastomer housing 110. In this state, in case that the particular external magnetic field generation device may locally generate the magnetic field, the rigidity and viscosity of the magnetorheological elastomer housing 110 and the magnetorheological fluid 130 may be locally increased in a region adjacent to the region in which the corresponding magnetic field is generated.

In addition, in case that the external magnetic field generation device generates the external alternating current magnetic field, the vibration may be generated from the magnetorheological elastomer housing 110 in a region adjacent to the region in which the corresponding magnetic field is generated. Therefore, in case that the haptic shoe is applied to a situation such as virtual reality, various virtual terrains may be represented by the change in rigidity or vibration and provided to a shoe wearer.

Meanwhile, in the haptic actuator 100 using a magnetorheological elastomer and a magnetorheological fluid according to the embodiment of the present invention, an electrorheological elastomer may be applied instead of the magnetorheological elastomer of the magnetorheological elastomer housing 110, or an electrorheological fluid may be applied instead of the magnetorheological fluid 130. This configuration will be described below.

FIG. 8 is a view illustrating an embodiment in which an electrorheological elastomer housing is applied instead of the magnetorheological elastomer housing 110 illustrated in FIG. 1, and an electrorheological fluid is applied instead of the magnetorheological fluid 130.

With reference to FIG. 8, in the present invention, an electrorheological elastomer (ERE) may be substituted for the magnetorheological elastomer applied to the magnetorheological elastomer housing 110, and an electrorheological fluid (ERF) may be substituted for the magnetorheological fluid 130. In this case, when an electric field is applied from the outside instead of a magnetic field, the rigidity and viscosity increase in the same way as those of the magnetorheological elastomer housing 110 and the magnetorheological fluid 130, such that the elastomer may operate like a rigid body.

While the present invention has been described above with reference to the exemplary embodiments, it may be understood by those skilled in the art that the present invention may be variously modified and changed without departing from the spirit and scope of the present invention disclosed in the claims.

## Claims

1. A haptic actuator using a magnetorheological elastomer and a magnetorheological fluid, the haptic actuator comprising:
a magnetorheological elastomer housing (110) having a hollow portion (111) therein;
an elastomer (120) provided in the magnetorheological elastomer housing (110); and
a magnetorheological fluid (130) with which the hollow portion (111) is filled,
wherein when an external magnetic field is applied, rigidity of the magnetorheological elastomer housing 110 increases, and viscosity of the magnetorheological fluid (130) increases, such that a resistive force against an external force increases, and
wherein when an external alternating current magnetic field is applied, the magnetorheological elastomer housing (110) generates vibration while being repeatedly compressed and restored in a direction in which the external magnetic field is applied.

2. The haptic actuator of claim 1, wherein the magnetorheological elastomer housing (110) has a cylindrical shape having a hollow portion therein.

3. The haptic actuator of claim 1, wherein the magnetorheological elastomer housing (110) has a hollow portion therein and is formed to have a size corresponding to an area of a sole of a shoe.

4. The haptic actuator of claim 3, wherein the elastomer (120) is provided as a plurality of elastomers (120) provided in the hollow portion (110) inside the magnetorheological elastomer housing (110) having a size corresponding to the area of the sole of the shoe.

5. The haptic actuator of claim 4, wherein when a magnetic field is locally generated from a particular external magnetic field generation device among a plurality of external magnetic field generation devices provided in an entire region of the sole of the shoe, rigidity and viscosity of the magnetorheological elastomer housing (110) and the magnetorheological fluid (130) are locally increased in a region adjacent to a region in which the corresponding magnetic field is generated.

6. The haptic actuator of claim 1, wherein the magnetorheological elastomer housing (110) is provided as a plurality of magnetorheological elastomer housings (110) corresponding to an area of a sole of a shoe.

7. The haptic actuator of claim 1, wherein upper and lower sides of the elastomer (120) adjoin upper and lower surfaces in the magnetorheological elastomer housing (110) .

8. The haptic actuator of claim 1, wherein when the external magnetic field is applied, iron particles in the magnetorheological fluid (130) are vertically aligned between parts of the elastomer (120) and hinder compression of the elastomer (120).

9. The haptic actuator of claim 1, wherein when the external alternating current magnetic field is applied, a partial region of the magnetorheological elastomer housing (110) is compressed in a direction in which the external alternating current magnetic field is applied, and
wherein when the direction in which the external alternating current magnetic field is applied is changed, a process in which a shape of the magnetorheological elastomer housing (110) is restored to an original shape by an elastic force of the elastomer (120) is repeated.

10. The haptic actuator of claim 1, wherein when an external force is applied in a direction from an upper side to a lower side in a state in which no external magnetic field is applied, the magnetorheological elastomer housing (110) is compressed downward and deformed in shape, such that a height of the magnetorheological elastomer housing (110) is reduced, and a lateral surface of the magnetorheological elastomer housing (110) extends outward while being compressed downward.
